# EUROPEAN PATENT SPECIFICATION

(11) **EP 0 386 501 B1**
(45) Date of publication and mention of the grant of the patent: **25.05.1994**
(21) Application number: 90102990.0
(22) Date of filing: 16.02.1990
(51) Int. Cl.: G21C 3/12

(54) **Improved hold-down spring clamps on fuel assembly top nozzle**
Klemmen für Niederhaltefedern auf dem Kopfstück eines Brennelementes
Dispositif de calage pour ressort antienvol sur l'embout supérieur d'un assemblage de combustible

(30) Priority: 06.03.1989 US 319590
(43) Date of publication of application: 12.09.1990
(73) Proprietor: WESTINGHOUSE ELECTRIC CORPORATION, Pittsburgh Pennsylvania 15222 (US)
(72) Inventor: Rylatt, John Anthony, Columbia, South Carolina 29209 (US)
(74) Representative: Gallo, Wolfgang, Dipl.-Ing. (FH)

(56) References cited:
- JP-A-62 102 186
- US-A- 4 560 312
- US-A- 4 792 429

## Description

The present invention relates generally to fuel assemblies for a nuclear reactor and, more particularly, to improved hold-down spring clamps on the top nozzle of such fuel assembly. A top nozzle of the kind defined in the preamble of claim 1 is disclosed in JP-A-62.102.186.

Conventional designs of fuel assemblies include a multiplicity of fuel rods held in an organized array by grids spaced along the fuel assembly length. The grids are attached to control-rod guide thimbles, and top and bottom nozzles at opposite ends of the fuel assembly are secured to end portions of the control-rod guide thimbles extending above and below the fuel rods.

During operation of a nuclear reactor, coolant flowing upward past the fuel rods and guide thimbles of each fuel assembly induces significant upward forces. These forces are countered by the weight of the fuel assembly and hold-down forces produced by a hold-down device comprising spring assemblies which push against the upper core plate of the reactor, thereby preventing the fuel assembly from being lifted into damaging contact with the upper core plate by the force of the upwardly flowing coolant, while allowing for changes in fuel assembly length due to induced thermal expansion and the like.

Heretofore, the hold-down spring assemblies of the hold-down device have been fastened and held in their operative positions on the top nozzle by means of several clamps in the form of corner blocks separate from the top nozzle, and a number of screws which extend through the corner blocks and through bases of the spring assemblies and which, together with the corner blocks, clamp the spring assemblies at their respective bases to a peripheral top flange of the top nozzle. In their operative positions, the spring assemblies extend along and within the outer perimeter of the top nozzle enclosure and are inclined upward to contact the upper core plate.

More particularly, each hold-down spring assembly of the hold-down device is attached to the top nozzle of the fuel assembly by means of a single spring screw. The screws associated with the various spring assemblies are so arranged that, for four hold-down spring assemblies, two pairs of spring screws are located at the opposite corners of the top nozzle. The corner clamp block with recessed holes defined in it sits over each pair of spring screws and acts as a protective cover for the heads of the spring screws. As shown in US-A-3,791,466, each corner clamp block is secured to the top nozzle by welding and/or a single clamp screw. As shown in EP-A-0 212 902, each spring screw is locked against rotation and is retained in place by means of a lock pin welded to the inside of the screw head clearance hole in the clamp block.

It is conceivable that the head of a spring screw might break off. If both screws at a single clamp location were to fail, the leverage forces exerted by the now unclamped hold-down spring assemblies could cause the clamp block-to-nozzle welds to fail, in which event both the clamp block and spring screw heads would be unrestrained and free to move under the action of the coolant flow, and the spring assemblies would be free to pivot about relative to the top nozzle. Such unrestrained spring assemblies would be likely to interfere with the operation of the control rod assemblies.

It is the principal object of the invention to provide improved means for retaining hold-down spring assemblies on the top nozzle, means with which the above-mentioned problems cannot arise.

Accordingly, the invention is directed to a fuel-assembly top nozzle as defined in claim 1 and resides in an improved spring clamp thereon which comprises a clamp block formed integral with a top portion of the top nozzle at each of a pair of diagonal corners thereof, each clamp block having formed therein a pair of interconnected clamp slots each of which defines interconnected openings at the front and outer side thereof. The front and outer side openings permit sideways insertion of the hold-down spring assembly at a base end thereof to position the spring assembly for attachment to the top nozzle. Each clamp slot also provides a flat bottom surface in the clamp block for clamping the hold-down spring assembly. A fastener having an externally threaded head extends through an internally threaded bore in the clamp block, through a hole in the base end of the spring assembly and into a hole in the top nozzle.

As will be appreciated, such a clamp embodying the invention has the advantage that in the unlikely event a spring screw fails under its head, leverage forces on the portion of the clamp integral with the top nozzle will be resisted by the adequate tensile area of said clamp portion so that the clamp will not separate from the top nozzle. With the clamp remaining integral, the spring screw head and hold-down spring assemblies are fully retained.

A preferred embodiment of the invention will now be described, by way of example only, with reference to the accompanying drawings, in which:-
Figure 1 is an elevational view, partly in section, of a conventional fuel assembly shown in vertically foreshortened form and with parts thereof broken away for clarity;
Fig. 2 is an enlarged top plan view of the fuel assembly of Fig. 1, showing the top nozzle thereof with separate hold-down spring clamps affixed thereto;
Fig. 3 is an enlarged fragmentary view of the left-hand corner and associated hold-down spring clamp of the conventional top nozzle shown in Fig. 1;
Fig. 4 is an enlarged top plan view of a top nozzle embodying the invention, shown without hold-down spring assemblies;
Fig. 5 is a side elevational view of the top nozzle, as seen along line 5--5 of Fig. 4;
Fig. 6 is an enlarged fragmentary cross-sectional view of the top nozzle, as taken along line 6--6 of Fig. 4;
Fig. 7 is a top plan view of the top nozzle, as seen along line 7--7 of Fig. 6;
Fig. 8 is a cross-sectional view of the top nozzle, as taken along line 8--8 of Fig. 6;
Fig. 9 is a view similar to Fig. 6 but showing also a base end of a hold-down spring assembly installed under a hold-down spring clamp;
Fig. 10 is a side elevational view of the hold-down spring assembly;
Fig. 11 is an end elevational view of the hold-down spring assembly, as seen along line 11--11 of Fig. 10; and
Fig. 12 is a view similar to Fig. 9 and showing a hold-down spring clamp embodying the invention.

In the following description, like reference characters designate like or corresponding parts throughout the several views of the drawings, and terms such as "forward", "rearward", "left", "right", "upward", "downward", and the like are used as words of convenience not to be construed as limiting terms.

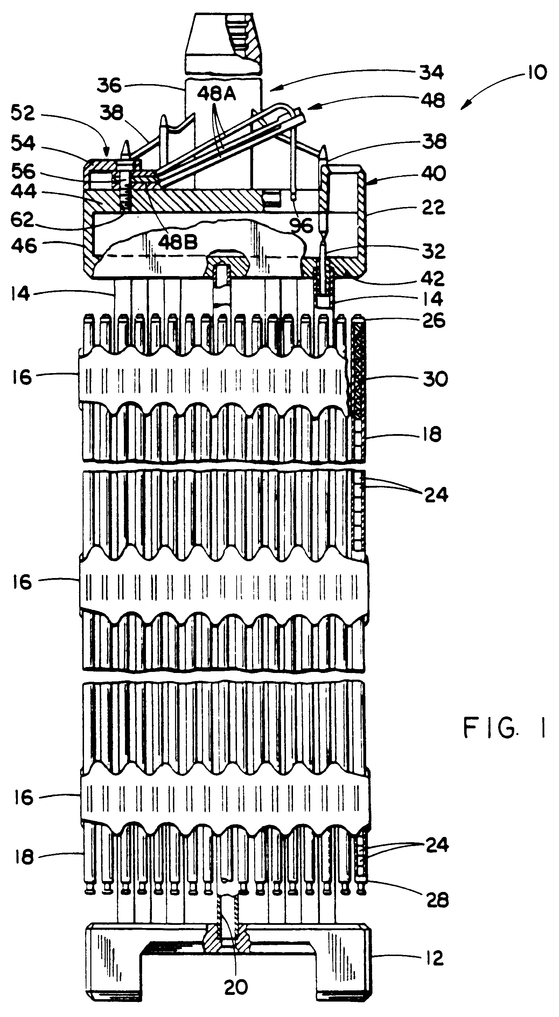

Referring now particularly to Fig. 1 of the drawings, the fuel assembly illustrated therein and generally designated with reference numeral 10 comprises basically a lower end structure, or bottom nozzle, 12 for supporting the assembly on the lower core plate (not shown) in the core region of a nuclear reactor (not shown), guide tubes, or thimbles, 14 projecting longitudinally upward from the bottom nozzle 12, transverse grids 16 axially spaced along and attached to the guide thimbles 14, an organized array of elongate fuel rods 18 transversely spaced and supported by the grids 16, a central instrumentation tube 20, and an upper end structure, or top nozzle, 22 attached to the upper ends of the guide thimbles 14. Each fuel rod 18 contains nuclear fuel pellets 24 made of fissile material, and has its opposite ends hermetically sealed by means of end plugs 26,28. Usually, each fuel rod contains also a plenum spring 30 disposed between the upper end plug 26 and the stack of pellets 24 in order to keep the latter firmly stacked. During operation of the reactor, a liquid moderator/coolant, such as water or water containing boron, is pumped upwards through the fuel assemblies of the reactor core so as to extract therefrom heat for producing useful work.

The top nozzle 22 includes a rod cluster control mechanism 34 having an internally grooved cylindrical member 36 with flukes or arms 38 extending radially therefrom and each having a control rod 32 connected thereto. The control mechanism 34 is operable to vertically move the control rods 32 in the guide thimbles 14 for the purpose of controlling the fission process in the fuel assembly 10, all as well known in the art.

As seen from Figs. 1 to 3, the top nozzle 22 comprises a unitary enclosure, or housing, 40 formed by a transversely extending adapter plate 42 and a sidewall 46 which extends upward from the adapter plate at the periphery thereof and has an annular, or peripheral, upper inward flange 44. Clamped to the annular flange 44 are spring assemblies 48, each composed of a set or stack of leaf springs 48A, which all together constitute a fuel-assembly hold-down device adapted, as mentioned above, to coact with the upper reactor-core plate (not shown) so as to prevent hydraulic lifting of the fuel assembly 10 during upward flow of reactor coolant while allowing for changes in fuel-assembly length due to core-induced thermal expansion. The rod cluster control mechanism 34 is disposed in the rectangular opening 50 defined by the upper flange 44 on the sidewall 46 of the top nozzle 22.

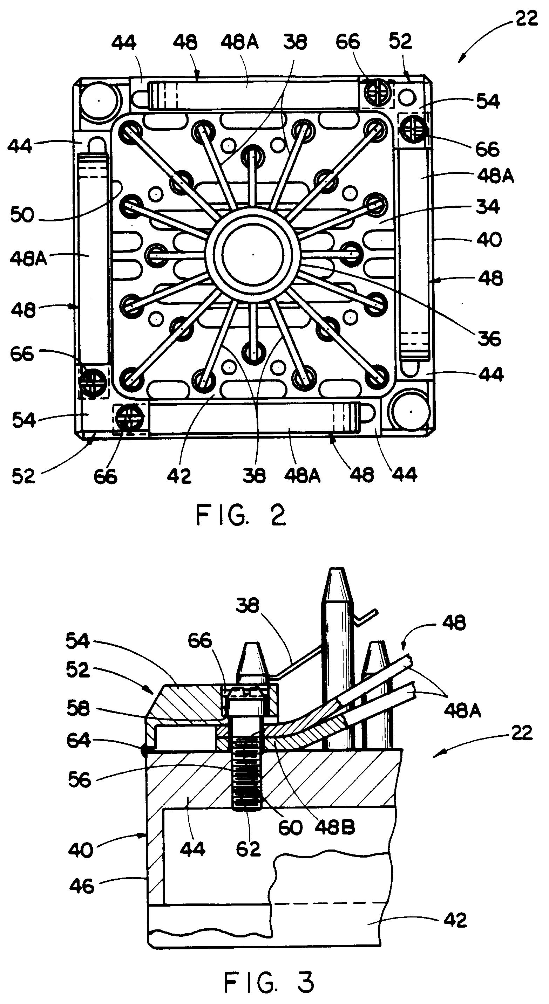

As shown in Fig. 2, the four spring assemblies 48 are grouped in pairs each held in position by means of one of two spring clamps 52 affixed to the top-nozzle upper flange 44 at two diagonal corners thereof, each spring clamp 52 consisting of a corner block 54 and two spring screws 56, one for each spring assembly 48 of the associated pair. As seen best from Fig. 3, each spring assembly 48 is conventionally fastened in place by inserting one of the spring screws 56 through a counterbore 58 in the associated corner block 54 and a hole 60 in the base end portion 48B of the spring assembly 48, and threadedly engaging the screw 56 in a tapped hole 62 formed in the top-nozzle upper flange 44. The spring screw 56 is tightened to clamp the base end portion 48B of the associated spring assembly 48 between the top clamp block 54 and the nozzle upper flange 44, whereupon the former is welded, as at 64, to the latter. The spring screw 56 is locked against rotation and retained in place by means of a lock pin 66 welded to the inside of the counterbore 58 in the clamp block 54.

In their operative positions, the spring assemblies 48 extend along the flange 44 (see Fig. 2) and are inclined upwardly (Fig. 1) so as to engage and coact, when in use, with the upper core plate of the nuclear reactor. If both screws 56 at a single clamp location were to fail, leverage from the thus unclamped pair of spring assemblies 48 might cause the weld 64 between the affected clamp block 54 and the nozzle flange 44 to fail. In such an event, the clamp block and the heads of the failed screws would be unrestrained and thus free to be carried away in the reactor-coolant flow, and the affected spring assemblies could pivot on the top nozzle and interfere in the operation of the control rods.

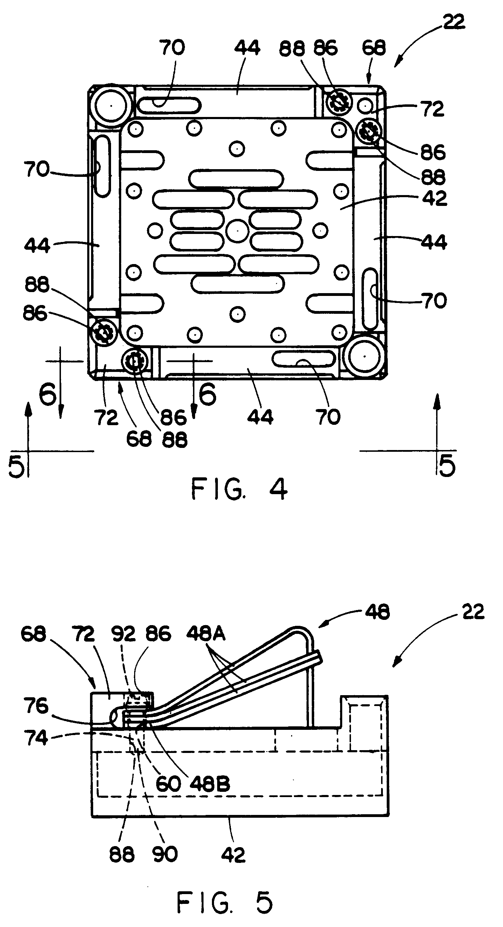

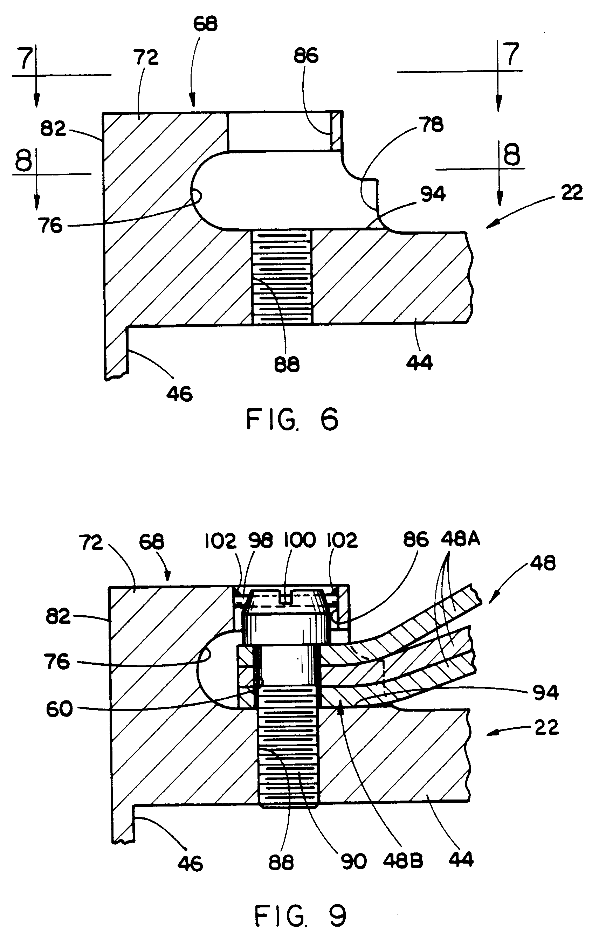

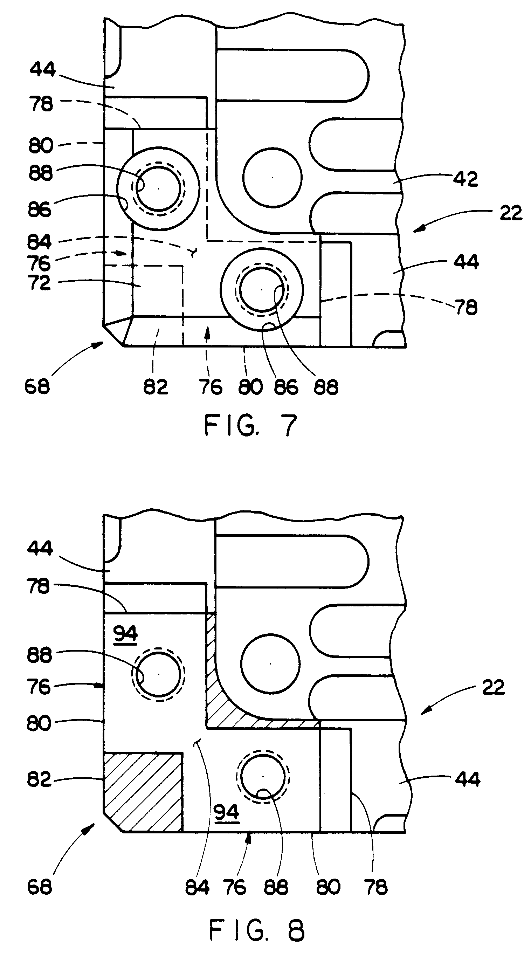

Referring now to Figs. 4-9, there is illustrated a pair of improved spring clamps 68, which overcome the above-described drawback and retain the spring assemblies 48 on the top nozzle 22 in an improved manner. Except for the construction and configuration of the improved spring clamps 68 and the location of spring slots 70 defined in the top nozzle flange 44, the top nozzle 22 is substantially the same as shown in Figs. 1-3. Therefore, the same reference numerals are used to identify the same parts.

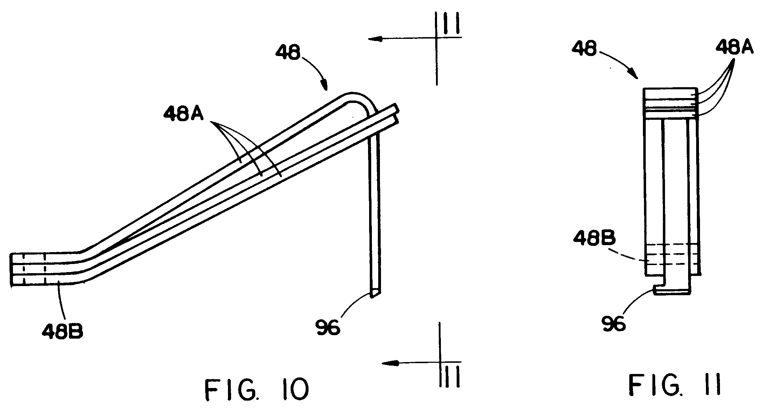

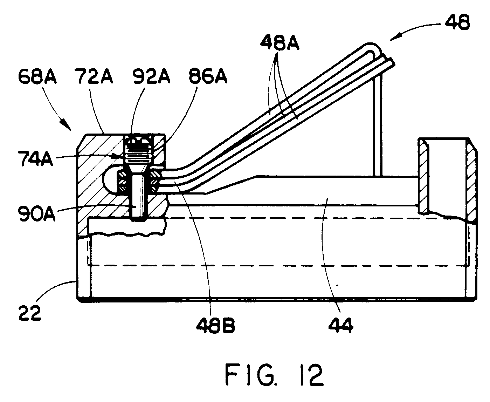

Each of the improved spring clamps 68 includes a clamp block 72 and a pair of fasteners 74 associated with the clamp block 72. The clamp block 72 of each improved spring clamp 68 is formed integrally with the top portion or flange 44 of the top nozzle 22 at each of one pair of diagonal corners of the top nozzle. Each clamp block 72 has a pair of interconnected clamp slots 76 formed therein, such as by machining, for insertion of the base ends 48B of one of the two pairs of spring assemblies 48 shown in Figs. 10 and 11. Each clamp slot 76 is formed in the clamp block 72 with interconnected openings 78, 80 at front and outer side thereof. The front opening 78 is aligned with the top nozzle flange 44, whereas the outer side opening 80 is at the outer side of the top nozzle flange. Each clamp slot 76 is closed at its inner side adjacent the inner side of the top nozzle flange and closed by a corner solid portion 82 of the integral clamp block 72. A common rear corner opening 84 is defined within the clamp block 72 which interconnects the pair of clamp slots 76 defined in the block. The front and outer side openings 78, 80 of each clamp slot 76 permit sideways insertion of the base end 48B of one spring assembly 48 to position the spring assembly 48 for attachment to the top nozzle 22.

The pair of fasteners 74 of each improved spring clamp 68 being associated with the one clamp block 72 thereof are used for attaching one of the two pairs of spring assemblies 48 to the top nozzle flange 44. The clamp block 72 has a pair of spaced bores 86 defined therethrough, each bore being aligned with one of the clamp slots 76 and with a hole 88 in the flange 44 of the top nozzle 22. Each fastener 74 is provided in the form of a screw having a threaded stem 90 and a head 92 for installing and fastening through the clamp block bore 86, through the hole 60 in spring assembly base end 48B when inserted in the clamp slot 76, and into the hole 88 in the top nozzle flange 44. In the embodiment of Fig. 4, the flange hole 88 is internally threaded for receiving the threaded stem 90 of the screw fastener 74. The head 92 of the fastener 74 thus clamps the base end 48B of the spring assembly 48 against a flat bottom surface 94 provided in the clamp block slot 76 on the top nozzle flange 44.

In Fig. 12, an embodiment of the spring clamp 68A according to the invention is shown. In this embodiment, each of the bores 86A in the clamp block 72A is internally threaded. Instead of the stem 90A of the fastener 74A being threaded, its head 92A is externally threaded for threading with the internally threaded bore 86A of the clamp block 72A. In this embodiment, the fastener head 92A pushes down on the base end 48B of the spring assembly 48, instead of "pulling" it down as in the earlier embodiment. It offers the additional advantage of remaining securely in position within the clamp bore 86A even in the unlikely event that cracking of the stem 90A beneath the head 92A should occur.

It should be understood that each clamp slot 76 in the clamp blocks 72 can be formed at a preselected angle relative to the plane of the top nozzle flange 44 for customizing the spring force of the spring assembly 48 to the hydraulic and static force balance requirements of the hold-down device. Also, it should be noted that on the top nozzle flange 44 as seen in Fig. 4, the placements of some of the spring slots 70 have been relocated such that left-hand and right-hand configurations of the spring assemblies 48 are no longer required. Only a single-hand spring assembly 48 is used, as seen in Figs. 10 and 11, making inventory accounting easier.

The integral feature of each improved spring clamp 68 results in a unique method by which each hold-down spring assembly 48 is installed on the top nozzle 22.

First, the spring assembly 48 is oriented at an angle, such as orthogonally, to one of the elongated spring slot 70 defined in flange 44 of the top nozzle 22. Next, an offset tang or anchor member 96 on the forward end of the spring assembly 48 is inserted into the spring slot 70. The offset member 96 cannot be inserted into or removed from the spring slot 70 except at such orientation of the spring assembly 48. Following next, the spring assembly 48 is pivotally moved along a path generally parallel to the top nozzle 22 and about its anchor member 96 to bring its opposite base end 48B adjacent to the outer side opening 80 of the clamp block slot 76. In such alignment, the spring assembly base end 48B can then be inserted sideways into the clamp slot 76 through the side and front openings 80, 78. Then, the fastener 74 is installed through the bore 86 in the integral clamp block 72 above the clamp slot 76, through the hole 60 in the spring assembly base end 48B, and into the threaded hole 88 in the top nozzle flange 44. Finally, a lock pin 98 can be installed in a slot 100 defined across the fastener head 92 and attached by welds 102 at its opposite ends to the inside surface of the bore 86 in the clamp block 72 to restrain the fastener 74 against rotation and thereby retain the fastener in its installed condition.

## Claims

1. A top nozzle (22) on or for a nuclear fuel assembly (10) having a hold-down device comprising at least one spring assembly (48) which is mounted on said top nozzle and has a base end portion (48B) thereof secured to the top nozzle by means of a clamp (68) comprising a clamp block (72) and a fastener (74), said clamp block (72) being formed integral with the top nozzle (22) and having formed therein a clamp slot (76) with interconnected front and outer-side openings (78,80) which permit sideways insertion of said base end portion (48B) of the spring assembly (48) into the clamp slot (76), and said fastener (74A) extending through a bore (86) in the clamp block (72), through a hole (60) in the inserted base end portion (48B) of the spring assembly (48), and into a hole (88) formed in the top nozzle, characterized by said bore (86) in the clamp block (72) being internally threaded, and said fastener having an externally threaded head (92A) which is threadedly engaged in the internally threaded bore (86) of the clamp block and holds said base end portion (48B) of the spring assembly (48A) firmly clamped against a lower wall portion (94) of said clamp slot (76).

2. A top nozzle according to claim 1, wherein said lower wall portion (94) is a flat surface.

3. A top nozzle according to claim 1 or 2, wherein said clamp slot (76) in the clamp block (72) is formed at a preselected angle, relative to a horizontal plane of the top nozzle (22), which customizes the spring force of said spring assembly (48) with respect to the hydraulic and static force balance requirements of said hold-down device.

4. A top nozzle according to claim 1, 2 or 3, wherein said clamp block (72) has formed therein an additional clamp slot (76) for receiving a base end portion (48B) of an additional spring assembly (48), said clamp slot and said additional clamp slot being interconnected with each other.

## Patentansprüche

1. Kopfstück (22) auf oder für ein Kernbrennelement (10), mit einer Niederhaltevorrichtung, die mindestens eine Federbaugruppe (48) aufweist, die an dem Kopfstück montiert ist und einen Basisteil (48B) aufweist, der am Kopfstück mittels einer Klammer (68) befestigt ist, die einen Klemmblock (72) und ein Befestigungselement (74) umfaßt, wobei der Klemmblock (72) einstückig mit dem Kopfstück (22) ausgebildet ist und einen darin gebildeten Klemmschlitz (76) mit miteinander verbundenen front- und außenseitigen Öffnungen (78, 80) aufweist, die ein seitliches Einführen des Basisteils 48B der Federbaugruppe (48) in den Klemmschlitz (76) ermöglichen, und wobei das Befestigungsorgan (74A) durch eine Bohrung (86) im Klemmblock (72), durch eine Bohrung (60) im eingeführten Basisteil (48B) der Federbaugruppe (48) und in eine im Kopfstück gebildete Bohrung (88) hinein verläuft, dadurch gekennzeichnet, daß die genannte Bohrung (86) im Klemmblock (72) mit Innengewinde versehen ist und das Befestigungselement einen mit Außengewinde versehenen Kopf (92A) aufweist, der in die Innengewinde versehene Bohrung (86) des Klemmblocks eingeschraubt ist und den Basisteil (48B) der Federbaugruppe (48a) fest gegen einen unteren Wandteil (94) des Klemmschlitzes (76) gespannt hält.

2. Kopfstück nach Anspruch 1, wobei der untere Wandteil (94) eine ebene Fläche ist.

3. Kopfstück nach Anspruch 1 oder 2, wobei der Klemmschlitz (76) im Klemmblock (72) unter einem gewählten Winkel relativ zu einer Horizontalebene des Kopfstücks (22) gebildet ist, der die Federkraft der Federbaugruppe (48) mit Bezug auf die hydraulischen und statischen Kraftausgleichserfordernisse der Niederhaltevorrichtung anpaßt.

4. Kopfstück nach Anspruch 1, 2 oder 3, wobei der Klemmblock (72) mit einem darin gebildeten zusätzlichen Klemmschlitz (76) zur Aufnahme eines Basisteils (48B) einer zusätzlichen Federbaugruppe (48) aufweist, wobei der Klemmschlitz und der zusätzliche Klemmschlitz miteinander verbunden sind.

## Revendications

1. Embout supérieur (22) sur ou pour un ensemble combustible nucléaire (10) comportant un dispositif de maintien en position appuyée comprenant au moins un agencement de ressort (48) qui est monté sur ledit embout supérieur et est fixé à sa partie d'extrémité de base (48B) à l'embout supérieur au moyen d'une bride de fixation (68) comprenant un bloc (72) de bride et un élément de fixation (74), ledit bloc (72) de bride faisant corps avec l'embout supérieur (22) et comportant une fente (76) de bride, qui y est formée, avec des ouvertures côté avant et côté extérieur (78, 80), reliées mutuellement, qui permettent une insertion latérale de ladite partie d'extrémité de base (48B) de l'agencement de ressort (48) dans la fente (76) de bride, et ledit élément de fixation (74A) s'étendant à travers un perçage (86) du bloc (72) de bride, à travers un trou (60) de la partie d'extrémité de base insérée (48B) de l'agencement de ressort (48), et jusque dans un trou (88) formé dans l'embout supérieur, caractérisé en ce que ledit perçage (86) du bloc (72) de bride est fileté intérieurement, et ledit élément de fixation comporte une tête (92A) filetée extérieurement qui est vissée dans le perçage (86) fileté intérieurement du bloc de bride et maintient ladite partie d'extrémité de base (48B) de l'agencement de ressort (48A) fermement pressée contre une partie de paroi inférieure (94) de ladite fente (76) de bride.

2. Embout supérieur selon la revendication 1, dans lequel ladite partie de paroi inférieure (94) est une surface plate.

3. Embout supérieur selon la revendication 1 ou 2, dans lequel ladite fente (76) de bride du bloc (72) de bride est formée, par rapport à un plan horizontal de l'embout supérieur (22), suivant un angle choisi préalablement qui adapte la force du ressort de l'agencement de ressort (48) aux exigences d'équilibre de forces hydraulique et statique du dispositif de maintien en position appuyée.

4. Embout supérieur selon la revendication 1, 2 ou 3, dans lequel ledit bloc (72) de bride comporte une fente supplémentaire de bride (76) qui y est formée et qui est destinée à recevoir une partie d'extrémité de base (48B) d'un agencement supplémentaire de ressort (48), ladite fente de bride et la dite fente supplémentaire de bride étant reliées l'une à l'autre.
